## Europäisches Patentamt

## European Patent Office

## Office européen des brevets

(11) Veröffentlichungsnummer: **0 326 900**
**B1**

(12) **EUROPÄISCHE PATENTSCHRIFT**

(45) Veröffentlichungstag der Patentschrift:
**05.12.90**

(21) Anmeldenummer: **89101136.3**

(22) Anmeldetag: **23.01.89**

(51) Int. Cl.⁵: **F04F 5/46,** F02G 5/02,
F01P 5/10, F22B 1/18

(54) **Pulsierende Dampfstrahlpumpe mit Verdrängerkörper.**

(30) Priorität: **04.02.88 DE 8801396 U**

(43) Veröffentlichungstag der Anmeldung:
**09.08.89 Patentblatt 89/32**

(45) Bekanntmachung des Hinweises auf die Patenterteilung:
**05.12.90 Patentblatt 90/49**

(84) Benannte Vertragsstaaten:
**AT BE CH DE ES FR GB IT LI LU NL SE**

(56) Entgegenhaltungen:
**DE-C- 583 792**
**FR-A- 736 138**
**GB-A- 1 397 435**
**SU-A- 981 706**

(73) Patentinhaber: **INTERATOM Gesellschaft mit
beschränkter Haftung, Friedrich-Ebert-Strasse,
D-5060 Bergisch-Gladbach 1(DE)**

(72) Erfinder: **Niemeyer, Wolfgang,
Albert-Einstein-Strasse 7, D-5060 Bergisch
Gladbach 1(DE)**
Erfinder: **Pütz, Heinrich, Wellerscheid 2,
D-5203 Much(DE)**

(74) Vertreter: **Fuchs, Franz-Josef, Dr.-Ing. et al,
Postfach 22 13 17, D-8000 München 22(DE)**

## Beschreibung

Die vorliegende Erfindung betrifft eine Dampfstrahlpumpe nach dem Oberbegriff des 1. Anspruchs. Aus der IT-A-1 081 143 ist eine Dampfstrahlpumpe bekannt, die ein sich kegelförmig verjüngendes, mit seinem weiten Ende in die zu pumpende Flüssigkeit ragendes Rohr aufweist, das an seinem anderen Ende beheizt wird; die sich hier bildenden Dampfblasen entweichen periodisch (mit einer Frequenz in der Größenordnung von 50 Hz) aus dem Rohr und schieben dabei die im übrigen das Rohr füllende Flüssigkeit vor sich her, so die Pumpwirkung auslösend. In der wegen ihrer großen Masse im Ganzen verhältnismäßig kühl bleibenden Flüssigkeit kollabiert die Dampfblase und das Pumpenrohr füllt sich erneut mit Flüssigkeit. Für eine derartige Dampfstrahlpumpe wird bevorzugt eine Verwendung zum Umpumpen des Kühlmittels einer Verbrennungskraftmaschine vorgeschlagen, wobei die zur Beheizung des Pumpenrohres erforderliche Wärme den Abgasen entnommen wird. Hierzu ragt dieses mit seinem dünnen Ende, das mit den Wärmeübergang verbessernden Mitteln wie Rippen versehen ist, in die Abgasleitung hinein.

Wenn die sich bildende Dampfblase tatsächlich die gesamte Flüssigkeit aus dem Rohr hinausdrücken soll, muß sie den freien Querschnitt desselben zu jedem Zeitpunkt vollständig ausfüllen. Anderenfalls würde sie nur am oberen Rande des Rohres entweichen, während in dessen unterer Hälfte bereits vorzeitig wieder Flüssigkeit einströmen würde, so daß sich insgesamt gesehen kein nennenswerter Pumpeffekt ergibt. In der genannten Druckschrift wird daher ein Rohr in Form eines Kegels mit geringer Grundfläche und sehr großer Höhe vorgeschlagen. Der hierfür erforderliche Platz steht speziell bei der Anwendung der Vorrichtung auf Kraftfahrzeugmotoren nicht immer zur Verfügung, so daß eine gedrungenere Kegelform angestrebt werden muß.

Aufgabe der vorliegenden Erfindung ist eine Ausgestaltung der Dampfstrahlpumpe in der Art, daß durch die Verwendung eines kegelförmigen Rohres mit größerer Öffnung des Spitzenwinkels die Baulänge verringert werden kann.

Die Lösung dieser Aufgabe erfolgt durch die im kennzeichnenden Teil des 1. Anspruchs angegebenen Mittel. Der Verdrängerkörper wandelt den der Ausbreitung der Dampfblase zur Verfügung stehenden Querschnitt von einer vollflächigen, vorzugsweise Kreisform in eine Ringform um; der Abstand zwischen Rohrwand und Verdrängungskörper ist dann so gering, daß die Stabilität der Dampfblase bis zu ihrem gewollten (thermischen) Kollabieren nicht gefährdet ist.

Ein Ausführungsbeispiel der Erfindung ist in der Zeichnung dargestellt, und zwar zeigt

Figur 1 die eingentliche Pumpe im Längsaxialschnitt und

Figur 2 die Verschaltung derselben im Flüssigkeitskreislauf.

Die Pumpe besteht aus einem sich konisch verjüngenden Rohr 1, das an seinem engen Ende mit Rippen 2 versehen ist und hiermit in einer Leitung 3 angeordnet ist, in der ein Heizfluid, z. B. die Abgase einer Verbrennungskraftmaschine in der durch die Pfeile angedeuteten Richtung strömt. Die das Rohr 1 füllende Flüssigkeit, z. B. das Kühlwasser eben dieser Verbrennungskraftmaschine wird dadurch bis über den Siedepunkt aufgeheizt, so daß sich schließlich eine Dampfblase bildet, die die Flüssigkeit aus dem Rohr 1 verdrängt. Diese strömt in ein Pumpengehäuse 4 und beschleunigt die dieses füllende Flüssigkeitsmasse in Pfeilrichtung, wodurch der Flüssigkeitskreislauf aufrechterhalten wird. Die Dampfblase kollabiert, sowie sie in den durch die zu pumpende Flüssigkeit auf einem verhältnismäßig kühlen Temperaturniveau gehaltenen Bereich nahe dem weiten Ende des Pumprohres 1 gelangt. Ein Entweichen der Dampfblase ohne daß eine nennenswerte Pumpwirkung auftritt, z. B. indem sich erstere infolge ihrer geringen Größe nur an der Oberseite des erweiterten Bereichs befindet, während an dessen Unterseite ein Gegenstrom von Flüssigkeit erfolgt, wird durch das Vorhandensein eines Verdrängungskörpers 5 verhindert. Der Vorgang des Zusammenfallens der Dampfblase wird dadurch unterstützt, daß sowohl der Verdrängungskörper 5 als auch eine die Außenseiten des erweiterten Bereichs abdeckende Schicht 6 aus einem Material mit hohem Wärmespeichervermögen, z. B. aus Kupfer hergestellt sind. Die Körper 5, 6 befinden sich durch die Benetzung mit der zu fördernden Flüssigkeit zunächst auf einem verhältnismäßig niedrigen Temperaturniveau; wird die Flüssigkeit durch die Dampfblase verdrängt, entziehen diese Körper 5, 6 derselben eine erhöhte Wärmemenge, wodurch die Kondensation beschleunigt wird. Strömt dann erneut Flüssigkeit ein, entzieht diese den Körpern 5, 6 die zuvor aufgenommene Wärme. Eine Isolierschicht 7 verhindert einen erhöhten Wärmeaustausch mit der Umgebung.

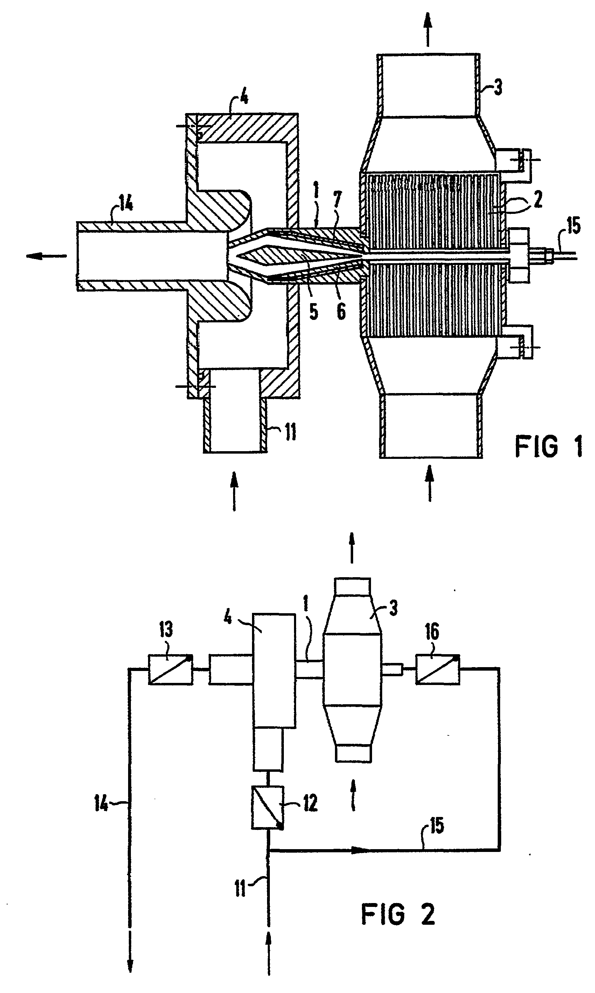

Der Zustrom der Flüssigkeit zur Pumpe 4 erfolgt (siehe Figur 2) über eine Leitung 11, in die ein erstes Rückschlagventil 12 eingebaut ist, das sicherstellt, daß durch die Verdrängung der Flüssigkeit aus dem Pumpenrohr 1 keine Rückströmung in der Leitung 11 auftritt. Ebenso verhindert ein zweites Rückschlagventil 13 in einer weiteren, dem Abfluß der Flüssigkeit dienenden Leitung 14 den umgekehrten Effekt, nämlich daß in dieser ebenfalls eine Rückströmung eintritt, wenn durch den Kollaps der Dampfblase im Pumpenrohr 1 erneut Flüssigkeit in dieses strömt. Das Wiederauffüllen der Flüssigkeit in dem beheizten Bereich des Pumpenrohres 1 erfolgt entweder durch das Pumpenrohr 1 oder/und über eine von der Zuleitung 11 abzweigende Umgehungsleitung 15, die in das enge Ende desselben mündet, wobei ein drittes Rückschlagventil 16 dafür sorgt, daß auch hier keine Rückströmung eintreten kann, etwa durch den Druck der sich bildenden Dampfblase.

## Patentansprüche

Pulsierende Dampfstrahlpumpe mit einem kegelförmig sich verjüngenden Pumprohr (1), das mit seinem offenen weiten Ende in eine Leitung (4, 14) für die zu pumpende Flüssigkeit ragt, **dadurch gekennzeichnet**, daß im Pumprohr (1) auf mindestens einem Teil seiner Länge und koaxial dazu ein Verdrängungskörper (5) angeordnet ist.

## Claims

Pulsating steam jet pump having a conically tapering pump tube (1), the open, wide end of which projects into a line (4, 14) for the fluid which is to be pumped, characterised in that a displace (5) is arranged in the pump tube (1) along at least one portion of its length and coaxially thereto.

## Revendications

Ejecteur à vapeur pulsatoire, comprenant un tube d'éjecteur (1) qui se rétrécit coniquement et dont l'extrémité large pénètre dans un conduit (4, 14) pour le liquide à pomper, caractérisé en ce qu'un corps de refoulement (5) est disposé dans le tube d'éjecteur (1), sur au moins une partie de sa longueur et coaxialement à celui-ci.

FIG 1

FIG 2